# EUROPÄISCHE PATENTANMELDUNG

(11) **EP 1 593 426 A1**
(43) Veröffentlichungstag der Anmeldung: **09.11.2005**
(21) Anmeldenummer: 05007610.8
(22) Anmeldetag: 07.04.2005
(51) Int. Cl.: B01J 19/30, B01J 19/32

(54) **Abdichtung der Anstaulage einer Anstaupackung zum Kolonnenmantel**

(30) Priorität: 04.05.2004 DE 102004021985
(71) Anmelder: BASF Aktiengesellschaft, 67056 Ludwigshafen (DE)
(72) Erfinder: Kashani-Shirazi, Nawid, 68161 Mannheim (DE); Siegert, Markus, Dr., 69126 Heidelberg (DE); Sirch, Tilman, 67105 Schifferstadt (DE); Kaibel, Björn, 40724 Hilden (DE)

(57) **Zusammenfassung**

Packungskolonne enthaltend Packungslagen in Form von Anstaulagen und Abscheideanlagen, wobei zumindest eine Abdichtung in Höhe einer Anstaulage zum Kolonnenmantel angebracht ist und die Abdichtung beim Betrieb der Kolonne bezogen auf die Querschnittsfläche weniger Gas und Flüssigkeit durchlässt als die restliche Querschnittsfläche.

## Beschreibung

Die vorliegende Erfindung betrifft eine Verbesserung einer Packungskolonne enthaltend Packungslagen in Form von Anstaulagen und Abscheideanlagen.

Das Prinzip solcher Anstaupackungen ist beispielsweise in DE 199 36 380 A1 beschrieben. Es basiert darauf, Teilbereiche der Packung gezielt zu fluten, um den Stoffübergang zu verbessern sowie die Verweilzeit der Flüssigkeit zu erhöhen.

Eine Möglichkeit der Realisierung dieses Prinzips ist die Kombination handelsüblicher Blechpackungen mit voneinander abweichender spezifischer Packungsoberfläche, wodurch innerhalb der Kolonne Zonen unterschiedlicher fluiddynamischer Belastung geschaffen werden. Die Bereiche mit höherer spezifischer Packungsoberfläche werden gezielt nahe des Flutpunktes betrieben und dienen aufgrund des dort herrschenden intensiven Kontaktes zwischen dem Dampf und der Flüssigkeit der Verbesserung des Stoffübergangs sowie der Erhöhung der Vennieilzeit, sie werden im folgenden Anstaulagen genannt, wohingegen die Bereiche mit geringerer spezifischer Packungsoberfläche weit unterhalb des Flutpunktes betrieben werden und in erster Linie als Tropfenabscheider fungieren und daher im folgenden als Abscheidelagen bezeichnet werden.

Für eine zufriedenstellende Funktion der Anstaupackung hat das Anstauverhalten einen wesentlichen Einfluss. Dieses Anstauverhalten hängt jedoch nicht nur von der verwendeten Anstaupackung, sondern auch von den übrigen verfahrenstechnischen Rahmenbedingungen ab. Es ist es allgemein bekannt, Stoffaustauschpakete (Packungen) einer Kolonne ringsum mit Randabweisern zu versehen, welche die an der Kolonnenwand herunterfließende Flüssigkeit zur Stoffaustauschpackung leiten. Generell kann jedoch der Randspalt einer Packung zum Kolonnenmantel bzw. Trennblech bei unzureichender Abdichtung als Bypass für den Dampf dienen, was die Effektivität des auszuübenden Verfahrens beeinträchtigt.

Dieses Problem stellt sich bei der Verwendung von Anstaupackungen in erhöhtem Maße und es stellte sich die Aufgabe, eine Vorrichtung zu finden, welche den genannten Nachteilen abhilft und eine verfahrenstechnisch einfache und effektive Verfahrensausübung ermöglicht.

Demgemäss wurde eine Packungskolonne enthaltend Packungslagen in Form von Anstaulagen und Abscheideanlagen gefunden, welche dadurch gekennzeichnet ist, dass zumindest eine Abdichtung in Höhe einer Anstaulage zum Kolonnenmantel angebracht ist, wobei die Abdichtung beim Betrieb der Kolonne bezogen auf die Querschnittsfläche weniger Gas und Flüssigkeit durchlässt als die restliche Querschnittsfläche.

Bei beginnendem Anstieg des Flüssigkeitsinhaltes in der Anstaulage erhöht sich der Druckverlust in diesem Bereich ebenfalls. Hierbei kann es insbesondere in diesem Bereich zu einem unerwünschten Ausweichen von Dampf bzw. Gas auf diejenigen Querschnittsbereiche der Kolonne kommen, in denen der Druckverlust geringer ist als in der Anstaulage mit erhöhtem Flüssigkeitsinhalt. Dieses Ausweichen bei der Anstaupackung auf Höhe der Anstaulage erweist sich jedoch gerade als besonders nachteilig, weil es dadurch zu einem verspätetem Anstauen kommt, was die Effektivität des Verfahrens stark beeinträchtig. Je nach Anwendungsfall kann es sogar dazu führen, dass kein Anstauen in der angestrebten Art und Weise realisiert werden kann.

Durch die erfindungsgemäße Abdichtung in Höhe der Anstaulage wird dem geschilderten Effekt des Ausweichens begegnet. Dies führt vorteilhafterweise dazu, dass sich das Anstauen deutlich einfacher und effektiver gestaltet. Dem durch die Kolonne strömenden Gas wird mittels der Abdichtung ein höherer Widerstand entgegengebracht, als das Gas in der Anstaulage bei erhöhtem Flüssigkeitsinhalt erfährt. Hierdurch ist gewährleistet, dass das Gas weiterhin durch diese Packungslage und nicht über einen Bypass strömt. Eine nähere Quantifizierung hinsichtlich der jeweils erforderlichen Güte der Abdichtung ist allgemein nicht möglich, da diese aufgrund der oben genannten Vorgabe (höherer Widerstand als in der Anstaulage im Betrieb) von den jeweils vorliegenden konkreten Rahmenbedingungen stark beeinflusst wird. Neben der konkreten Trennaufgabe seien hier exemplarisch die vorliegenden Betriebsbedingungen sowie die spezifische Oberfläche der verwendeten Anstaulage genannt.

Durch die erfindungsgemäße Anordnung der Abdichtung auf Höhe der Anstaulage wird weiterhin der Anstaubereich vorteilhafterweise verbreitert. Generell ist unter dem Anstaubereich jener Bereich zu verstehen, in welchem es zum Ausbilden einer Sprudelschicht in der Anstaulage kommt. Dieser Anstaubereich ist bei steigender Gasbelastung durch das Fluten der Packung limitiert.

Besonders vorteilhaft erweist sich die erfindungsgemäße Ausgestaltung bei Kolonnen bzw. Kolonnenabschnitten oder Kolonnenteilen, welche einen Durchmesser von weniger als 1 m, bevorzugt weniger als 0, 5 m aufweisen, da hier die Querschnittsfläche des Randspaltes im Verhältnis zur Querschnittsfläche der Packung überproportional groß ist.

Hinsichtlich der Lage der erfindungsgemäßen Abdichtung in Höhe der Anstaulage empfiehlt es sich besonders diese so anzuordnen, dass diese mit dem unteren Ende der Anstaulage abschließt.

Die erfindungsgemäße Abdichtung in Höhe der Anstaulage kann durch allgemein bekannte Arten erfolgen. Neben Randabweisern aus Blech können sich auch Abdichtungen mittels Teflonschnüren oder GoreTex-Schnüren empfehlen. Sofern Schnüre oder Bänder zur Abdichtung eingesetzt werden, wickelt man diese meist um die Packung bis zum Kotonnenmantetinnendurchmesser. Die Gestaltung solcher Abdichtungen ist dem Fachmann allgemein bekannt, Hinweise finden sich beispielsweise in der DE 4336985.

In einer bevorzugten Ausführungsform werden Randabweiser zur Abdichtung eingesetzt, welche zum Ableiten der Flüssigkeit ins Packungsinnere am unteren Ende der Anstaulage eine entsprechende Ausgestaltung (z.B. in Sägezahnform) besitzen. Diese Randabweiser sind im unteren Bereich zum Kolonnenmittelpunkt gebogen und gewährleisten damit eine Rückfuhr der an der Kolonnenwand herabrieselnden Flüssigkeit in das Innere der Packung.

Im Fall einer Trennwandkolonne erfolgt die erfindungsgemäße Abdichtung in Höhe der Anstaulage auch zum Trennblech.

Im folgenden wird die erfindungsgemäße Vorrichtung anhand von Zeichnungen exemplarisch näher beschrieben.

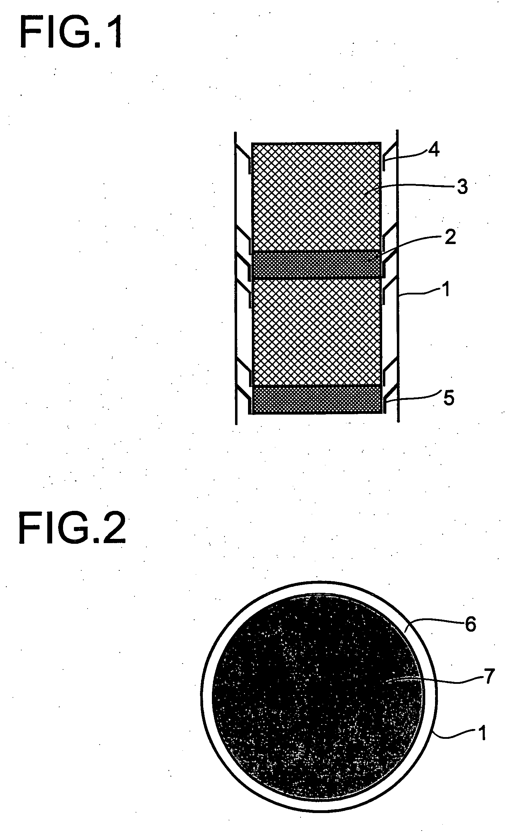

Figur 1 zeigt die Seitenansicht einer erfindungsgemäßen Packungskolonne im Schnitt. Innerhalb der Kolonne mit dem Kolonnenmantel (1) sind Anstaulagen (2) und Abscheidelagen (3) dargestellt. Neben Randabweisern in Höhe der Abscheidelage (4) sind die erfindungsgemäßen Randabweiser in Höhe der Anstaulage (5) zu sehen.

In Figur 2 ist eine Draufsicht der Kolonne im Schnitt zu sehen. Neben dem Kolonnenmantel (1) ist die aktive Querschnittsfläche (7) (mit Einbauten, die vorwiegend der Trennung des Stoffgemisches dienen) sowie die inaktive Querschnittsfläche (6) (Randspalt) zu sehen.

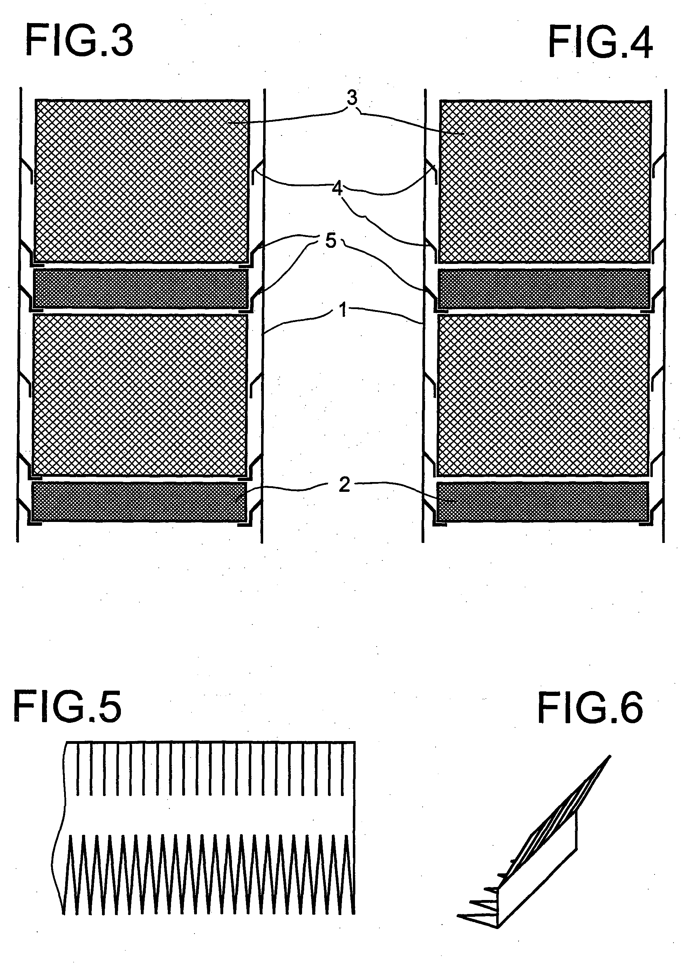

Figuren 3 und 4 zeigen weitere Ausgestaltungen, hier sind die Randabweiser zur Kolonnenmitte hin gebogen, wodurch die Rückleitung der Flüssigkeit in das Innere der Packung gewährleistet wird.

Die Figuren 5 und 6 zeigen eine bevorzugte Ausgestaltung von geeigneten Randabweisern. Sie weisen ein Sägezahnprofil auf (Figur 5) und sind im unteren Bereich zur Kolonnenmitte hin gebogen (Figur 6).

Die erfindungsgemäße Vorrichtung ermöglicht ein verfahrenstechnisch einfaches und effektives Anstauen der Flüssigkeit im Bereich der Anstaulage. Je nach konkretem Anwendungsfall wird ein Anstauen somit erst möglich oder der Anstaubereich vorteilhafterweise verbreitert.

## Patentansprüche

1. Packungskolonne enthaltend Packungslagen in Form von Anstaulagen und Abscheideanlagen, **dadurch gekennzeichnet, dass** zumindest eine Abdichtung in Höhe einer Anstaulage zum Kolonnenmantel angebracht ist, wobei die Abdichtung beim Betrieb der Kolonne bezogen auf die Querschnittsfläche weniger Gas und Flüssigkeit durchlässt als die restliche Querschnittsfläche.

2. Packungskolonne nach Anspruch 1, **dadurch gekennzeichnet, dass** es sich um eine Trennwandkolonne handelt und dass die Abdichtung in Höhe der Anstaulage zum Trennblech erfolgt.

3. Packungskolonne nach Ansprüchen 1 oder 2, **dadurch gekennzeichnet, dass** die Abdichtung an der Anstaulage befestigt ist.

4. Packungskolonne nach Ansprüchen 1 bis 3, **dadurch gekennzeichnet, dass** die Abdichtung durch querschnittsverengende Maßnahmen am unteren Ende der Anstaulage die Flüssigkeit ins Packungsinnere leitet.

5. Packungskolonne nach Ansprüchen 1 bis 4, **dadurch gekennzeichnet, dass** der Durchmesser der Anstaulage geringer als 1 m ist.

6. Packungskolonne nach Ansprüchen 1 bis 5, **dadurch gekennzeichnet, dass** die Seitenlänge der Anstaulage geringer als 1 m ist.

7. Packungskolonne nach Ansprüchen 1 bis 6, **dadurch gekennzeichnet, dass** eine Abdichtung aus Blech eingesetzt wird.

8. Packungskolonne nach Ansprüchen 1 bis 7, **dadurch gekennzeichnet, dass** eine Abdichtung aus Teflon eingesetzt wird.

9. Packungskolonne nach Ansprüchen 1 bis 7, **dadurch gekennzeichnet, dass** eine Abdichtung aus GoreTex-Schnüren eingesetzt wird.
